# EUROPEAN PATENT SPECIFICATION

(11) **EP 2 326 167 B1**
(45) Date of publication and mention of the grant of the patent: **05.12.2012**
(21) Application number: 09753557.9
(22) Date of filing: 01.05.2009
(51) Int. Cl.: A01L 7/10

(54) **FITTING FOR HOOVED AND CLOVEN-HOOVED ANIMALS**
BESCHLAGTEIL FÜR HUF- UND KLAUENTIERE
FER POUR ANIMAUX À SABOT ET À SABOT FENDU

(30) Priority: 28.05.2008 DK 200800728; 15.08.2008 DK 200801113
(43) Date of publication of application: 01.06.2011
(73) Proprietor: Biolit Aps, 3480 Fredensborg (DK)
(72) Inventor: JENSEN, Kjeld, Thorlund, 8620 Kjellerup (DK)
(74) Representative: Inspicos A/S
(86) International application number: PCT/DK2009/000100
(87) International publication number: WO 2009/143844

(56) References cited:
- FR-A- 428 706
- FR-A- 463 719
- GB-A- 722 583
- GB-A- 191 011 034
- US-A- 3 425 493

## Description

The present invention relates to a fitting for hooved and cloven-hooved animals, for example horses and cows. Despite the fact that the invention is disclosed based on hooved animals, the fitting can also be used for cloven-hooved animals in a similar manner, for example for cows.

From the time when the horse was tamed and domesticated by man, hoof care has been necessary. Different means have been used in the attempt to maintain the hoofs as healthy, smooth and durable as possible. Through proper hoof care you can to a high degree influence the stance and movement of the horse and thereby its performance and durability.

For thousand of years, different forms of horse shoes have been used to protect the hoof or the cloven hoof against wear.

A horse shoe is fastened to the bottom surface of the hoof, e.g. by means of horse shoe nails or glue. A common trait of all forms of known horse shoes is their harmful effects, among other things by the known horse shoes locking the hoof mechanism and thereby wholly or partly disabling the hoof's own shock-absorbing effect. In traditional horse shoes vibrations furthermore often occur similar to the vibrations in a tuning fork. When these oscillations interfere, it can be extremely harmful for the animal

French patent nos. 428706 and 463719 disclose a horse shoe nail with head and shank being driven into the horn wall. As the shank is located centrally under the head, the nail shown is not suitable as plantar surface of a hooved or cloven-hooved animal. This is because the horse shoe nail, owing to its form, is driven in too near the edge of the horn wall, risking damage to the hoof if the animal uses the nail head as plantar surface. Moreover, the head has a curved form further making it unsuitable as plantar surface as the entire plantar weight of the animal must be propagated through the plantar surface and shank. The inventor furthermore concludes that the fitting cannot be used because it will be detached during the landing phase of the hoof.

In the early 1980s Lucca Bein presented a rubber fitting, and in 1987 the shock-absorbing sole appeared under the name "Shock Tamer".

Despite the shock-absorbing soles, the existing shoes continue to be a discomfort for the hooved animal, and today the horse shoe still results in a significant reduction of the performance, well-being and average life span of horses. Studies thus show that the general health of the barefoot horse is better than corresponding shod horses.

The purpose of the present invention is *i.a.* to reduce or eliminate the discomfort caused by prior art wear-resistant fittings for hooved or cloven-hooved animals.

The present invention provides a fitting according to claim 1 and a method for its use according to claim 9.

Due to the location of the fastening area along a lip area of the blade, the fitting according to the invention offers protection of a significant part of the width of the bottom surface of the horn wall against wear and simultaneously enables the shank to be driven into a fastening point relatively close to the white line. Accordingly, the invention provides an improved protection of the bottom surface of the horn,

As the shank extends from an edge of the blade, the shank can be driven into an area between the middle of the bottom edge of the horn wall and inwards across the white and brown line to an innermost driving point at a safe distance to the pododerm. In the following, the term *"safe line"* refers to the limit of the pododerm to which the shank may be driven without the risk of damaging the hoof or cloven-hoof or causing the animal pain. A skilled farrier will be able to determine the safe line of a specific animal. When the shank is driven in between the middle of the bottom surface of the horn wall and the safe line, the shank is capable of transferring forces to the horn capsule of the hooved or cloven-hooved animal with very little risk or no risk at all of the horn capsule cracking or in any other way being damaged.

The asymmetrical shank in relation to the bottom surface of the blade enables the shank to be driven into said area between the middle of the bottom surface of the horn wall and the safe line and at the same time obtain such location of the blade as to cover an area between the safe line and the outer edge of the horn capsule. It is thereby achieved that the horn capsule is protected against wear, without the blade causing discomfort when contacting the remaining part of the hoof, e.g. the sole, and this makes the upper surface of the blade suitable as plantar surface for the hooved or cloven-hooved animal.

When the fitting is fastened to the horn wall it can, optionally without the use of any other form of fitting, have an anti-wear effect, without the fitting limiting the natural play of the hoof and with a significantly reduced risk of vibrations, which can influence the well-being of the animal.

The fitting can be inserted in any location of the horn wall of the hoof where it is desirable to reduce the wear of the hoof, optionally entirely about the bottom surface of the horn wall. However, often only fittings on single selected locations are necessary, e.g. along the inner and outer heel wall.

The shank must be suitable for being driven into the horn wall, i.e. it must be of a shape ensuring that the shank is not worked into the pododerm when being driven in, and that it is a type capable of being driven into a horn wall without deforming or at least without collapsing.

The shank may be of such a shape that the shank geometry influences the path of the shank trough the horn wall to be curved through the horn wall. To that end the shank may suitably comprise two side surfaces connected with two edge surfaces, one side surface forming an oblique termination, and the other side surface forming a straight termination. When driving in the shank it will curve in a direction away from the obliquely terminated side surface and thus away from the pododerm by suitable location of the fitting in relation to the hoof. Moreover, the edge surfaces may run towards each other towards the termination, resulting in a tapered termination.

The transition between the two side surfaces and the two edge surfaces may suitably be rounded or bevelled, which may ensure a more gentle insertion into the horn wall, thereby reducing the risk of undue damage in the area between the horn wall and the pododerm. Furthermore, the shank may have the same shape as the shank for a horse shoe nail with a widest side surface of the shank being close to the top and the side surface narrowing towards the tapered end of the shank, enabling it to be driven into the horn wall, such that the shank causes the least possible damage.

In this context, "asymmetrical" location of the shank in relation to the bottom surface of the blade means that the distance from the fastening area, where the blade and the shank are contiguous, to the edge of the blade varies around the circumference of the edge of the blade.

To protect a significant part of the width of the bottom surface of the horn wall against wear and to enable the shank to be driven into a fastening point relatively close to the white line and at the same time be able to cover the entire width of the bottom surface of the horn wall, the fastening area, where the shank is contiguous with the blade, may advantageously be located not just asymmetrically in relation to the bottom surface of the blade, but preferably right at the lip of the blade.

The shank and the blade are contiguous along a lip area of the blade - e.g. by the blade and the shank being formed in one piece of one material, e.g. plate-shaped material, which is folded, the fold forming the transition between the blade and the shank. Alternatively, the blade and the shank may be formed by sintering compressed pulverulent material or by extrusion. Thereby, the fitting forms the shape of the number 7, the blade forming the top horizontal part of the number 7, and the shank forming the lower oblique line of the number 7. The blade and the shank should form an angle of max. 100° and preferably an angle of max 90°, e.g. an angle of between 80° and 90° as this will protect the shank against deformation, as strokes against the blade are propagated vertically into the shank.

Alternatively, or in addition to said angles, correct impact with the hammer may be attempted by forming a projection on the upper surface of the blade. This projection should be disposed right above the fastening area where the shank and the blade are contiguous.

If the fastening area is asymmetrical in relation to the bottom surface, the previously mentioned side surface of the shank, having an oblique termination, may advantageously face away from a central area of the bottom surface of the blade.

The fitting may generally be formed of any material having the required strength, for example a metallic material or a plastics material, e.g. iron, titanium, aluminium or alloys thereof, or composite materials e.g. comprising plastics and/or ceramics. Similarly the fitting may be hardened, the material structure of the blade thereby becoming different from the material structure of the shank.

Parts of the fitting may be formed of a synthetic material, e.g. rubber, nylon, Teflon etc. Similarly, the entire fitting or parts of the fitting may be formed of a ceramic material.

The surface of the fitting and particularly the surface of the blade may optionally be hardened to increase wear resistance. For example, the fitting may be subjected to a Physical Vapor Deposition process (PVD), a process evaporating a solid material from a source object and depositing this evaporated material on the fitting. The temperature during the process is from 180-450 °C. The objects are fixed on a fixture pivoting during the process. PVD is a process in which it may be attempted only to coat selected parts of the fitting, e.g. the blade. It is thus possible to apply the material to parts of the fitting, e.g. the blade, without other parts being affected by the treatment, and the shank may therefore obtain a different quality than the blade even if the two parts are formed in one piece.

Alternatively, the fitting can be hardened by Chemical Vapor Deposition (CVD), which is a gas process taking place under vacuum at a relatively high temperature, 950-1050 °C.

In one embodiment, different materials are used for the blade and the shank. For example, the blade may be formed wholly or partly by rubber or a ceramic material, whereas the shank is formed of a different material. The use of different materials may, for example, impart the surface of the blade, i.e. the surface with which the animal contacts the ground, with a desired quality, e.g. with respect to wear resistance or slip resistance.

The shank and the blade may be formed in several pieces being joined by means of generally known joining techniques, e.g. welding or mechanical processing. However, the shank and the blade are preferably formed in one piece, e.g. by forging a piece of metal or a similar mouldable plastics material.

The blade may be formed with a different material structure than the shank. It is thus possible to achieve a greater wear resistance of the blade, e.g. by the blade having a greater hardness or toughness than the shank. Alternatively, or in combination therewith, the blade may be formed to be more smooth, which is an advantage in certain situations, or less smooth, or maybe even partly granulated, or with projections in order to increase the possibility of the animal being able to stand securely on a smooth surface. The fitting may optionally be formed with one or more projections removably secured to the exterior of the blade.

In one embodiment, both increased wear resistance and suitable smoothness are attempted in the same process. This is achieved by case-hardening the fitting, or parts thereof, by nitrocarburization with subsequent oxidation. This process has been found to be particularly advantageous for the fitting, especially if a hardening having a depth of between 0.01 and 0.5 mm, e.g. 0,1 mm, is performed.

The process, taking place by slow heating, can furthermore help form a matt, black and smooth surface, particularly suitable for being driven into the hoof. A good result is obtained e.g. by a 12-hour process with varying temperatures, here preferably a maximum of 575 °C. After this treatment the fitting is able to resist a saline mist test of a duration of 300 hours without corroding.

The blade may optionally be formed with a surface area that is substantially larger than the cross-sectional area of the shank. It has thus been found that an area of at least 5 times the cross-sectional area of the shank, at the greatest point of the shank, and even preferably 10 to 20 times larger, provides a plantar surface suitable for the hooved or cloven-hooved animal, without the shank being correspondingly large and thereby causing undue damage to the horn wall.

The upper surface of the blade, forming the plantar surface for the animal, may optionally have an area constituting 5 per cent of the total circumference of the hoof or cloven-hoof edge, e.g. a blade having an upper surface area of 1 - 4 square centimetres. The blade may e.g. have a substantially rectangular shape with side lengths of 0.5 to 2 centimetres.

The blade may suitably have a plane upper surface, and the blade should preferably be thin, i.e. the distance between the bottom and upper surfaces of the blade must be small, e.g. in the order of less than 2 mm or less than 1 mm. It can thus be ensured that the fitting constitutes a supplement to the plantar surface of the animal, and that the animal at the same time creates contact between the bottom surface of the horn wall and the plantar ground surface at locations where a fitting is not fastened.

When the hooved or cloven-hooved animal treads directly on a fitting that is only secured by the driving in of a single shank, this may result in the fitting twisting around the shank. To support the fitting and to prevent twisting around the shank, the fitting may furthermore comprise a supporting structure comprising a supporting surface extending from a supporting area, the supporting structure being contiguous with the bottom surface of the blade in the supporting area, and at its opposite end forming a free edge.

The supporting surface may optionally be constituted by a fold, i.e. an edge of the blade being bent downwards in a direction away from the plantar surface, or an edge formed by other means, e.g. by sintering, casting etc. The fastening area may optionally be along one of the two opposite edges of the blade, and the second of the two opposite edges may be folded downwards in the direction of the shank, thus forming a surface capable of abutting against the exterior of the horn wall.

The supporting surface may optionally be shaped after the fitting has been secured to the hoof. In this case it may be advantageous to shape the blade to allow bending around the edge of the horn wall, after securing the fitting. The blade may optionally comprise a zone in which the blade has less bending stability than the remaining part of the blade, optionally a zone of reduced material thickness.

The fitting may optionally be secured to the hoof in such a manner that the supporting surface abuts against an exterior of the horn wall. To that end it may be an advantage if the supporting surface has an obliquely bevelled outer surface, i.e. that the surface of the supporting surface facing away from the shank is obliquely cut, and the thickness of the supporting surface thus decreases towards the termination of the supporting surface.

The obliquely cut surface may prevent the supporting surface from tearing or otherwise damaging objects contacting the hoof of the animal, e.g. the animal's own legs, if the animal hits other parts of its body with the hoof or cloven-hoof.

If the supporting surface is formed by bending the blade after the fitting has been secured, the obliquely bevelled outer surface of the supporting surface could be pre-made by, initially before it is bent, imparting the part of the blade that is bent with an obliquely bevelled bottom surface.

As opposed to the outer surface, the inner surface may suitably be a plane surface or a surface of any shape suitable for abutting against the exterior of the hoof.

Alternatively, the fitting can be secured to the hoof or cloven-hoof in such a manner that the supporting surface is driven into the horn wall. For this purpose it is an advantage that the free edge of the supporting surface is sharp.

To further prevent the fitting from twisting around the shank, the shank can form a stabilizing surface. With said side and edge surfaces, forming the shank, this means that the side surfaces can be substantially larger than the edge surfaces, or at least that the side surfaces in one area can have a substantially larger surface than the edge surfaces. For example, the width of the side surfaces may be 2 - 5 times greater at the point where the shank forms a stabilizing surface than further down towards the tapered end where the shank is driven in.

Said stabilizing surface, forming part of the shank, may optionally face the supporting surface to extend, at least in a cross-section parallel to the plane of the blade, approximately in the same direction or possibly parallel to the supporting surface.

Both the supporting and the stabilizing surfaces may have varying heights and widths depending on the need for twisting stabilization.

If the blade has an approximately rectangular shape with the sides a and b, at least one of the supporting and stabilizing surfaces may optionally be parallel to the longest of these sides a and b. The longest side may optionally have a length of at least twice the length of the shortest side length of the blade.

The invention furthermore provides a method for the fitting of a hoof to a hooved or cloven-hooved animal by means of a fitting of the above-mentioned type. The method comprises driving the shank of the fitting into the horn wall in such a manner that the blade is exposed on the bottom surface of the hoof or cloven-hoof and thereby forms a surface on which the hooved or cloven-hooved animal can tread. The method may comprise driving the shank into a driving point on the bottom side of the hoof, the driving point being between a centre line and said safe line. The "centre line" is defined as the line where the distance is equally long to the inner and outer edges of the horn capsule.

The fitting may be driven in in such a manner that the blade does not contact the hoof sole but only abuts against the horn capsule.

The fitting may suitably be driven in in such a manner that the fitting only constitutes a supplement to the plantar surface of the animal, and that the animal thus is able to make contact between the bottom surface of the horn wall and the plantar ground surface at locations of the bottom surface of the horn wall at which no fitting is fastened. Through the daily contact between the hoof or cloven-hoof and the ground, i.e. soil, gravel, stone, asphalt etc., the hoof or cloven-hoof will have an improved ability to resist wear by hardening of the hoof or cloven-hoof in a more natural way for the animal than had the hoof or cloven-hoof been isolated from the ground by a more traditional horse shoe. To ensure said contact between the hoof or cloven-hoof and the ground, the fitting may be driven in sufficiently deep for the bottom surface of the blade to abut against the bottom edge of the horn wall, and possibly in such a manner that the upper surface of the blade is countersunk into the horn wall and thereby becomes approximately level with the bottom edge of the horn wall. The blade may also be tapped into the shape of the bottom surface of the horn wall to abut closely against the bottom surface, or to be countersunk into the horn wall, the animal thereby preventing plantar weight to be propagated solely through the blade and shank.

At the locations of the hoof or cloven-hoof at which a fitting is secured, this fitting may e.g. resist wear of the hoof. The fitting may therefore be located in areas selected based on a state of wear of the hoof or cloven-hoof of the hooved or cloven-hooved animal. This means that one or more fittings can be fastened either in the heel wall, side wall or toe wall depending on the desired wear pattern and thus the desired form of the hoof.

As mentioned previously, the fitting can be used alone or in combination with fittings of the same type. Furthermore, the fitting can in certain situations be used in combination with one or more fitting elements of a different shape. For example, the fitting can be used in combination with a wedge-shaped structure, which can be fastened to the hoof or cloven-hoof e.g. to modify the axes and angles of the toe and thereby the stance of the animal, or the fitting can be used in combination with a traditional horse-shoe structure or a fitting element forming part of a traditional horse shoe. This other fitting element may be formed of iron, rubber or any other material, e.g. titanium, aluminium or a ferromagnetic rust-proof material or an alloy of different materials etc. The fitting may optionally be used to hold the other fitting element for the hoof, e.g. by the other fitting element being held by one or more fittings.

If the fitting is driven in through a slit or a hole in the other fitting element, the slit or hole being larger than the shank, but having such shape that the blade is able to hold the fitting element, the other fitting element may be held slidably in relation to the hoof.

The fitting in its basic form, in accordance with any of the claims, can be used for changing the stance of a hooved or cloven-hooved animal. This is because the fitting protects the horn wall against wear. Optimally, the fitting is inserted countersunk into the horn wall, the upper surface of the blade, i.e. the plantar surface of the blade, thereby appearing as a plane surface contiguous with the other wear edge of the horn wall.

The fitting can be hardened as required to reduce, or at least control, wear of the blade, and an attempt could therefore be made for the blade to constitute a supplement to the plantar surface even after long-time use, and during this period less wear of the horn wall would be observed.

The size can be calculated as the area of the blade typically constitutes 5 per cent of the total circumference of the hoof edge. Hence, you can completely control the wear by means of the number of fittings used.

As the wear is controlled, it is now possible to adjust the stance of the horse, the shape of the hoof and the angles and axes of the toe. The shape of the hoof or cloven-hoof corresponds, or should correspond, exactly to the stance of the individual animal. The regular hoof or cloven-hoof is appropriate for the regular stance.

Similarly, the shape of the hoof or cloven-hoof will always be correct when the toe axis is straight. The toe axis is an imaginary line through the bones of the toe - in front view and from the side. The correct toe axis must always be unbroken. In order to assess a toe axis correctly, the leg must stand upright, and the support of the individual animal must be distributed evenly on all four legs on an even surface. Otherwise the toe axis will be broken at the front if the leg is in front of the vertical line; and broken in the opposite direction if the leg is behind the vertical line.

In front view an unbroken imaginary line should run all the way down through the legs of the individual animal. The lines will rarely, and do not need to, be completely vertical or parallel.

The fitting may advantageously be used for cloven-hoof care in the same way as for hoof care. Cloven-hooved livestock are on each leg provided with two fully developed toes whose outermost ends are each enclosed in a cloven-hoof capsule; - corresponding to the hoof capsule of the horse. The space between the two interrelated cloven-hoofs is called the interdigital cleft. Together, the shape of a pair of cloven-hoofs resembles a hoof that is cleaved in the longitudinal direction. As opposed to the horse, the cow has not developed an actual heel/angle of wall with bar support. This makes the cow very vulnerable to wear and thus sole crushing resulting in abscesses.

The purpose of the cloven-hoof care is to counteract the harmful consequences for the hoof resulting from the unnatural habits of our cloven-hooved livestock. As regards the goat, sheep and pig, it is generally not important due to the short life span of these animals. This is not the case with cattle. The importance of cloven-hoof care has been known for centuries.

In recent times, studies have supported the importance of cloven-hoof care. Studies show a dramatic increase in the quantities of meat and milk in connection with optimum care of the cloven-hoofs of cows and especially by influencing the wear of the cloven-hoof.

Cloven-hoof care is essentially the same as hoof care. To maintain correct stance and toe axes by trimming and inserting the fitting according to this invention. This is done to compensate for the lack of wear of the cloven-hoof.

In countries in which livestock are used as draught animals, the fitting can be used to obtain the opposite effect. In this case to resist inappropriate wear.

For further details concerning correct stance, reference is made to the book "Moderne hovpleje" (Modern Hoof Care) by H. H. Smedegaard, Jordbrugsforlaget, ISBN-13 9788774323877.

In accordance with the above, the invention furthermore provides a method for correcting the stance of a hooved or cloven-hooved animal. The fitting may optionally be positioned and/or repositioned so as to achieve a predetermined wear and hence shape of the hoof or cloven-hoof, making it is possible to change the axes and angles of the toes or to change the stance of a hooved or cloven-hooved animal. An incorrect stance can thus be corrected by driving in the fitting, taking account of the shape, angles and axes of the hoof.

A special use of the fitting, however, is aimed at improving the athletic performance in a horse. Because the fitting improves the natural hoof play in relation to a traditional horse shoe, and because the fitting can be made to weigh significantly less than a normal horse shoe, the performance of a horse in connection with e.g. jump, trot or gallop is often improved by replacing traditional horse shoes with fittings of the said type.

The fitting can also be used for generally improving the quality of the horn because the fitting does not limit the natural hoof play as is the case with a traditional horse shoe. Therefore, the fitting enables a fitted horse to have the same hoof play as a barefoot horse, which means that the aim is to obtain the same health condition as is typical for a barefoot horse.

The invention furthermore relates to the use of the fitting disclosed, in accordance with the claims, for the correction of a stance of a hooved or cloven-hooved animal, the use of the fitting according to the claims for improving the general health of a horse, the use of the fitting for improving the milk yield of a cloven-hooved animal by influencing the wear of the cloven-hoof as well as the use of the fitting for improving meat growth of a cloven-hooved animal by influencing the wear of the cloven-hoof.

In the following the invention will be further disclosed with reference to the drawings in which:
Figures 1 and 2 illustrate a fitting according to the invention;
Figures 3 and 4 illustrate a horse hoof in which a fitting is inserted;
Figures 5 to 8 illustrate a cross-section through the entire fitting;
Figures 9 and 10 illustrate a fitting in side view from two different angles;
Figure 11 illustrates a fitting in which the shank 2 forms a stabilizing surface;
Figures 12 to 17 illustrate a fitting in top view, and
Figures 18 to 20 illustrate a fitting shaped with a projection on the upper surface of the blade.

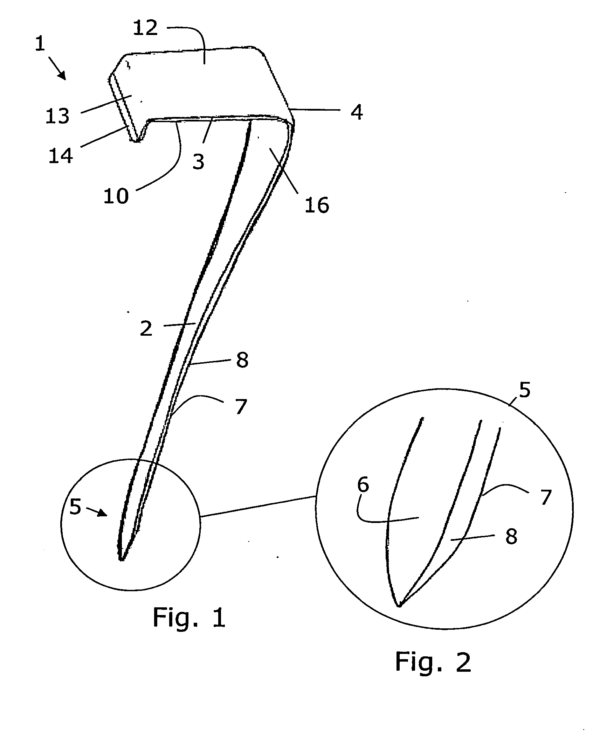

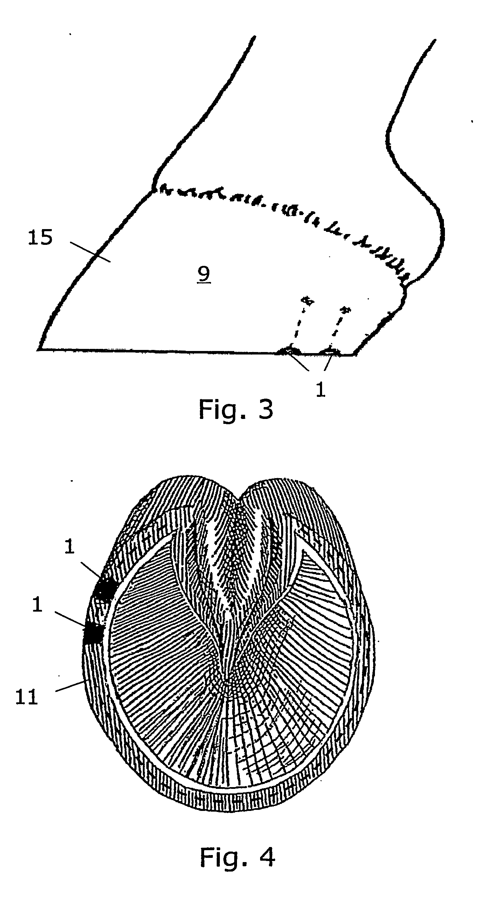

Figures 1 and 2 illustrate a fitting 1, and Figures 3 and 4 illustrate a horse hoof in which a fitting has been inserted. The fitting 1 comprises a shank 2 and a blade 3. The blade and the shank are made of metal in one piece. The blade 3 is formed by bending the metal piece, and the bent piece has been tapped flat to form an area that is significantly larger than the cross-section of the shank 2. The shank thus extends from a fastening area 4 of the blade and downwards towards a termination 5. As the blade and shank are made in one piece, which is bent, the fastening area along a lip of the blade - i.e. the fastening area is asymmetrical in relation to the bottom surface of the blade.

In Figure 2 the termination is shown in an enlarged sectional view. The shank has an inner side surface 6 pointing in the same direction as the blade and an outer side surface 7. The two side surfaces are connected with two edge surfaces 8. The outer side surface 7 is tapered towards the termination of the shank. This shape helps the shank curve in a direction away from the oblique termination when the shank is driven into a horn wall. Alternatively, the termination could be shaped using other geometries with or without tapering.

The blade 3 has a bottom surface 10 capable of abutting against a bottom edge 11 of the horn wall and an upper surface 12 suitable as plantar surface of the animal.

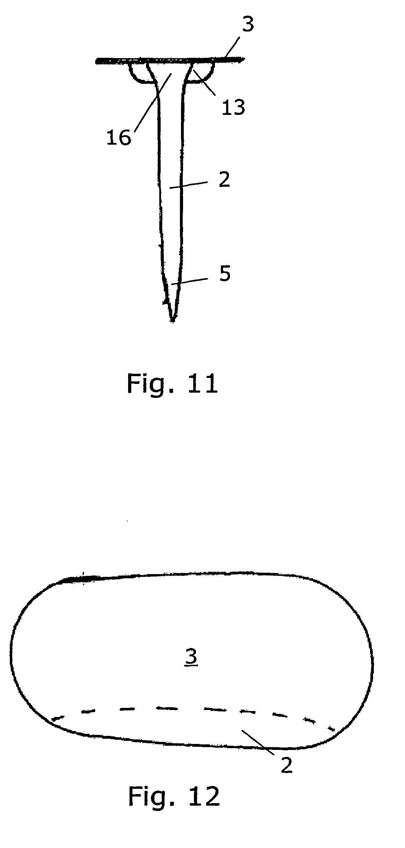

Contiguous with the end of the blade furthest away from the fastening area, the fitting comprises a supporting structure preventing the fitting from twisting around the shank when the fitting has been fastened to the hoof of a hooved or cloven-hooved animal. The supporting structure comprises a supporting surface 13 extending from a supporting area in which the supporting structure is contiguous with the blade, and at its opposite end the supporting structure forms a free edge 14. In the embodiment shown, the supporting surface 13 and the blade are made in one piece by the outermost edge of the blade being bent downwards such that the bent part points in approximately the same direction as the shank. The free edge 14 forms an obliquely cut outer surface and a straight inner surface, the outer surface facing away from the shank and the inner surface facing the shank. The geometry shown is advantageous because it enables the supporting structure to abut against an exterior of the horn wall, e.g. in such a manner that the supporting surface follows the contours of the hoof. Alternatively, the supporting surface is driven into the horn wall, and for this purpose the obliquely cut outer surface is similarly advantageous as it forms a more tapered termination of the supporting surface. Stabilizing surface 16 is further described with reference to Figure 11.

In Figure 4 the dotted line shows a centre line from which the distance is the same to the outer edge of the bottom surface of the horn capsule as to the inner edge of the horn capsule, i.e. the brown line. The driving point must be located between this centre line and the safe line.

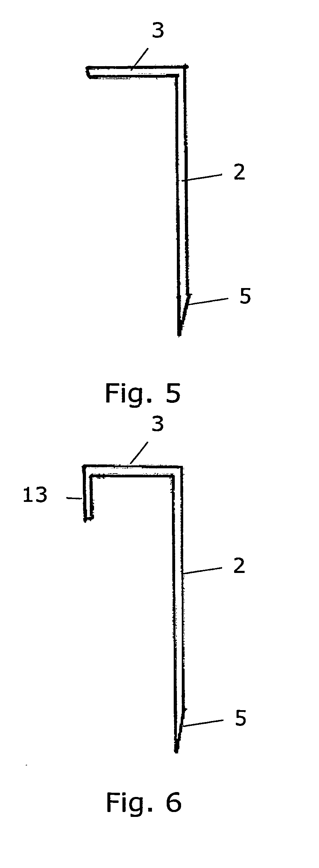

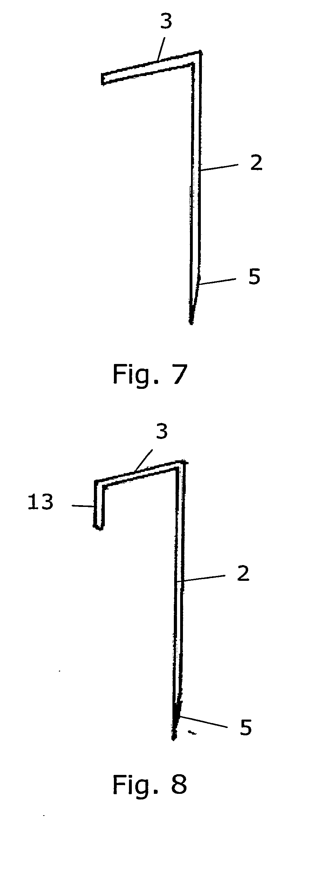

Figures 5 to 8 illustrate vertical cross-sections through the entire fitting. In Figures 5 and 6 the angle between the blade 3 and the shank 2 is approx. 90°. In Figure 5 the fitting does not comprise a supporting surface, whereas the supporting structure is included in Figure 6. Both Figure 5 and Figure 6 show an obliquely cut outer side surface at the termination 5. In Figures 7 and 8, the angle between the blade 3 and the shank 2 is less than 90°. The supporting surface 13 is shown in Figure 8 but not in Figure 7.

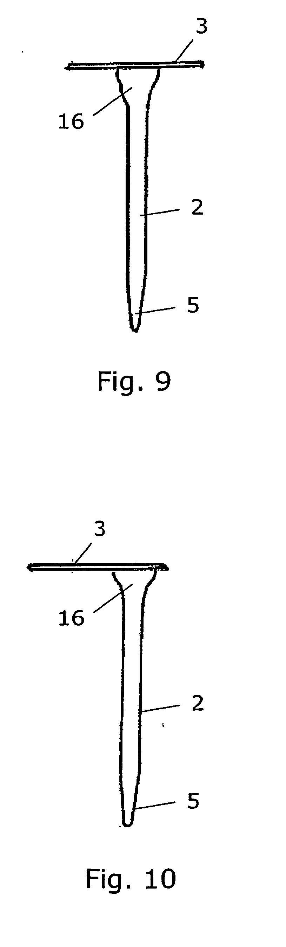

Figures 9 and 10 show a fitting in side view from two different angles. In the illustrated embodiment, the shank 2 forms a stabilizing surface 16 preventing the fitting from twisting around the shank when the fitting has been fastened to a hoof of a hooved or cloven-hooved animal. The stabilizing surface comprises an area of the shank in which the shank is wider. This means that the side surfaces are significantly wider, e.g. 3 to 6 times or maybe 10 times wider than the average width of the first centimeter from the termination.

Figure 11 shows a fitting in which the shank 2 forms a stabilizing surface 16 which can be driven into the horn wall, and at the same time the fitting comprises a supporting surface 13 capable of abutting against an exterior of the hoof or capable of being driven into the horn wall. The stabilizing surface may e.g. face the supporting surface, which means that the supporting surface and the stabilizing surface run in essentially the same direction when seen in a sectional view parallel to the blade. The supporting surface and the stabilizing surface may optionally be parallel.

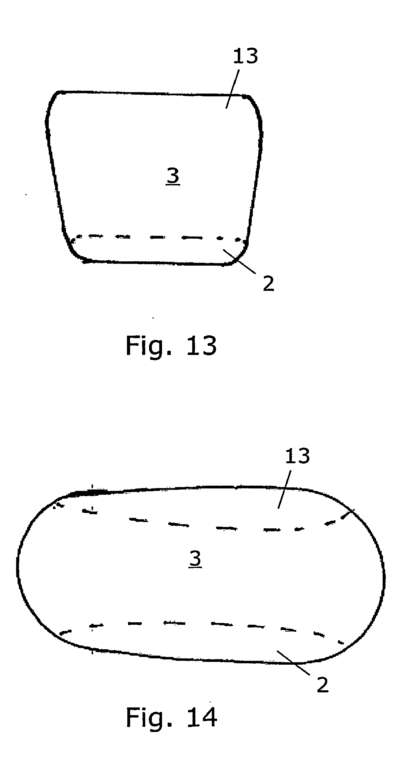

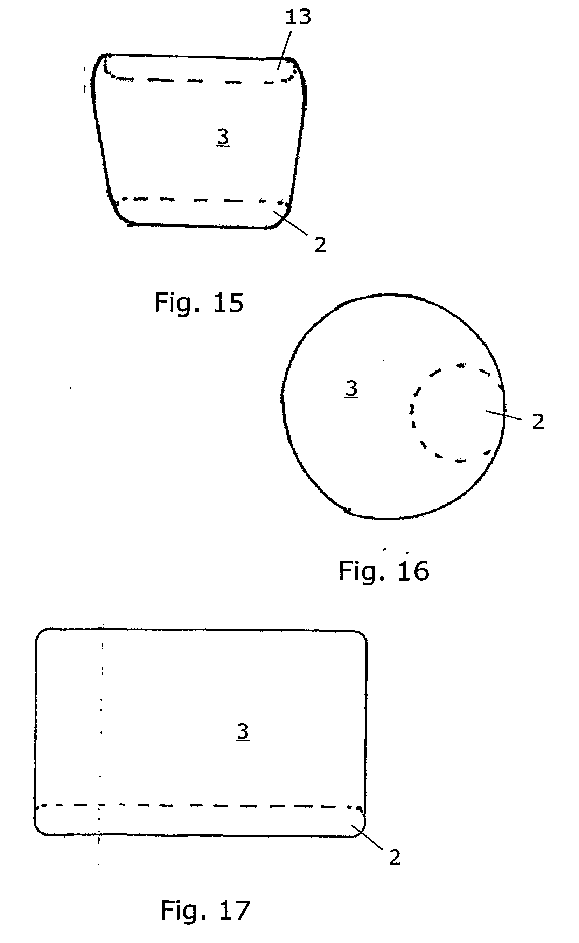

Figures 12 to 17 show a fitting in top view, i.e. straight down towards the blade 3. As shown, the blade may take different shapes, and the fitting may be with or without a supporting surface 13.

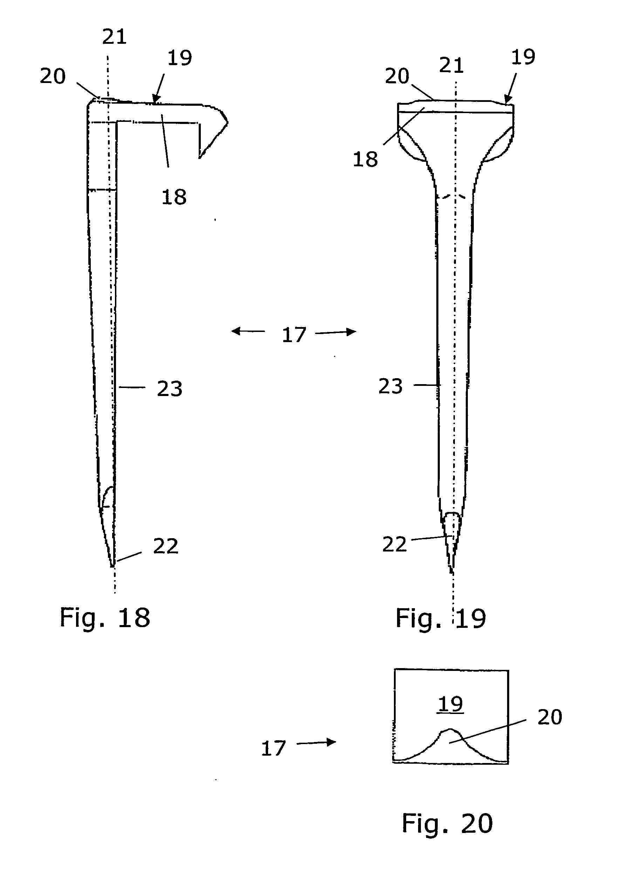

Figures 18 to 20 show an embodiment of the invention aiming at a more correct impact with a hammer to achieve a correspondingly correct insertion of the shank into the horn wall. This is achieved by the fitting 17 having a blade 18, the upper surface 19 of which has a projection 20. The projection 20 is formed in a straight line, symbolized by the dotted line 21, from the tip 22 of the shank 23 along the centre line of the shank up through the blade 18. The projection 20 is thereby located right above the fastening area where the shank 23 and the blade 18 are contiguous. If the upper surface 19 of the blade 18 is impacted by a hammer, the hammer will most likely transfer the major part of the impact force to the projection 20, the major part of the impact force thereby propagating directly down through the shank, thus avoiding bent or crooked insertion of the fitting. Figures 18 to 20 are drawn in accordance with European depiction rules, so Figure 18 is a side view of the fitting, Figure 19 is a back view of the fitting, i.e. from the left in Figure 18, and Figure 20 is a top view of the fitting in Figure 19.

## Claims

1. Fitting (1) for a hooved or cloven-hooved animal, comprising a shank (2) and a blade (3), the shank (2) being contiguous with the blade (3) in a fastening area (4) and extending therefrom towards a termination (5), formed in such a manner that the shank (2) is suitable for being driven into a horn wall (9), the blade (3) having a bottom surface (10) capable of abutting against a bottom edge (11) of the horn wall, and an upper surface (12) suitable as plantar surface of the animal, **characterized in that** the fastening area is located along a lip area of the blade (3).

2. Fitting according to claim 1, in which the blade (3) and the shank (2) form an angle of a maximum of 100°.

3. Fitting according to claims 1 or 2, in which the blade (3) has a different material structure than the shank (2).

4. Fitting according to any of the previous claims, in which the blade (3) has an area of at least 5 times the cross-section area of the shank (2), at the point of the largest cross-section area of the shank (2).

5. Fitting according to any of the previous claims, further comprising a supporting structure preventing the fitting from twisting around the shank when the fitting is fastened to a hoof of a hooved or cloven-hooved animal, the supporting structure comprising a supporting surface (13) extending from a supporting area in which the supporting structure is contiguous with the blade, and at its opposite end forming a free edge (14).

6. Fitting according to any of the previous claims, the shank (2) forming a stabilizing surface (16) preventing the fitting from twisting around the shank when the fitting is fastened to a hoof or cloven-hoof.

7. Fitting according to claims 5 and 6, in which the stabilizing surface faces the supporting surface (13).

8. Fitting according to claims 5 to 7, in which the supporting surface (13) has an inner surface facing the shank (2), and an outer surface facing away from the shank (2), and in which the outer surface is obliquely cut towards the free edge (14).

9. Method for fitting a hoof or cloven-hoof of a hooved or cloven-hooved animal by means of a fitting according to claims 1 to 8, the method comprising driving the shank of the fitting into the horn wall in such a manner that the upper surface of the blade is exposed thereby forming a surface on which the hooved or cloven-hooved animal can tread

10. Method according to claim 9, in which the shank is driven into a driving point on the bottom surface of the horn wall, the driving point being located between a centre line and a safe line, the safe line defining a safe distance from the pododerm, and in which the distance from the centre line to the outer and inner edges of the horn capsule is the same.

11. Method according to claim 10, in which the fitting is driven in sufficiently deep for the bottom surface of the blade to abut against the bottom edge of the horn wall.

12. A method according to any of claims 9-11, wherin the fitting is driven in in such a manner that the fitting only constitutes a supplement to the plantar surface of the animal such that the animal is able to make contact between the bottom surface of the horn wall and the plantar ground surface at locations of the bottom surface of the horn wall at which no fitting is fastened.

13. Method according to claim 12, in which the fitting is driven in sufficiently deep for the upper surface of the blade to be on a level with the bottom surface of the horn wall, forming a natural plantar surface for the animal.

14. Method according to any of the claims 9 to 13, in which the fitting is driven selectively into a heel wall, a side wall or toe wall depending on a wear state of the hoof or cloven-hoof of the hooved or cloven-hooved animal.

15. Method according to any of the claims 9 to 14, in which the fitting is driven in in such a manner that it does not contact the sole of the hoof.

## Patentansprüche

1. Beschlagteil (1) für ein Huf- oder Klauentier mit einem Schaft (2) und mit einem Blatt (3), wobei der Schaft (2) mit dem Blatt (3) in einem Befestigungsbereich (4) verbunden ist und sich von dort zu einem Ende (5) hin erstreckt, das derart ausgebildet ist, dass der Schaft (2) dazu eingerichtet ist, in eine Hornwand (9) eintreibbar zu sein, wobei das Blatt (3) eine untere Oberfläche (10), die dazu eingerichtet ist, gegen einen unteren Rand (11) der Hornwand anzuschlagen, und eine obere Oberfläche (12) aufweist, die als Plantarfläche des Tiers geeignet ist, **dadurch gekennzeichnet, dass** der Befestigungsbereich entlang einem Randbereich des Blatts (3) angeordnet ist.

2. Beschlagteil nach Anspruch 1, bei dem das Blatt (3) und der Schaft (2) einen Winkel von höchstens 100° bilden.

3. Beschlagteil nach den Ansprüchen 1 oder 2, bei dem das Blatt (3) eine andere Materialstruktur als der Schaft (2) aufweist.

4. Beschlagteil nach einem der vorangehenden Ansprüche, bei dem das Blatt (3) einen Bereich aufweist, der wenigstens fünfmal so groß wie der Querschnittsbereich des Schafts (2) an dem Punkt des größten Querschnittsbereichs des Schafts (2) ist.

5. Beschlagteil nach einem der vorangehenden Ansprüche, das weiterhin eine Stützstruktur aufweist, die verhindert, dass sich das Beschlagteil um den Schaft dreht, wenn das Beschlagteil an einer Hufe eines Huf- oder Klauentiers befestigt ist, wobei die Stützstruktur eine Stützfläche (13) aufweist, die sich von einem Stützbereich erstreckt, in dem die Stützstruktur mit dem Blatt zusammenhängt, und an ihrem gegenüber liegenden Ende eine Abschlusskante (14) bildet.

6. Beschlagteil nach einem der vorangehenden Ansprüche, wobei an dem Schaft (2) eine Stabilisierungsfläche (16) ausgebildet ist, die verhindert, dass sich das Beschlagteil um den Schaft dreht, wenn das Beschlagteil an einer Hufe oder Klaue befestigt ist.

7. Beschlagteil nach den Ansprüchen 5 und 6, bei dem die Stabilisierungsfläche der Stützfläche (13) zugewandt ist.

8. Beschlagteil nach den Ansprüchen 5 bis 7, bei dem die Stützfläche (13) eine dem Schaft (2) zugewandte Innenfläche sowie eine dem Schaft (2) abgewandte Außenfläche aufweist und bei dem die Außenfläche in Richtung der Abschlusskante (14) schräg angestellt ist.

9. Verfahren zum Beschlagen einer Hufe oder Klaue eines Huf- oder Klauentiers mittels eines Beschlagteils nach den Ansprüchen 1 bis 8, wobei das Verfahren das Eintreiben des Schafts des Beschlagteils in die Hornwand auf eine Art und Weise aufweist, dass die obere Oberfläche des Blatts freiliegt, wodurch eine Oberfläche gebildet wird, auf die das Huf- oder Klauentier auftreten kann.

10. Verfahren nach Anspruch 9, bei dem der Schaft in einen Eintreibpunkt auf der unteren Oberfläche der Hornwand eingetrieben wird, wobei der Eintreibpunkt zwischen einer Mittellinie und einer Sicherheitslinie angeordnet ist, wobei die Sicherheitslinie einen Sicherheitsabstand von der Lederhaut definiert, und bei dem der Abstand von der Mittellinie zu den äußeren und inneren Rändern der Hornkapsel der gleiche ist.

11. Verfahren nach Anspruch 10, bei dem das Beschlagteil so ausreichend tief eingetrieben wird, dass die untere Oberfläche des Blatts an den unteren Rand der Hornwand anliegt.

12. Verfahren nach einem der Ansprüche 9-11, bei dem das Beschlagteil derart eingetrieben wird, dass das Beschlagteil nur ein Zusatz zu der Plantarfläche des Tieres ist, so dass das Tier zwischen der unteren Oberfläche der Hornwand und der Plantargrundfläche an Stellen der unteren Oberfläche der Hornwand Kontakt herstellen kann, an denen kein Beschlagteil befestigt ist.

13. Verfahren nach Anspruch 12, bei dem das Beschlagteil ausreichend tief eingetrieben wird, dass die obere Oberfläche des Blatts auf einer Ebene mit der unteren Oberfläche der Hornwand ist, wodurch für das Tier eine natürliche Plantarfläche gebildet wird.

14. Verfahren nach einem der Ansprüche 9 bis 13, bei dem das Beschlagteil in Abhängigkeit von dem Abnutzungszustand der Hufe oder Klaue des Huf- oder Klauentiers wahlweise in eine Trachtenwand, eine Seitenwand oder eine Zehenwand eingetrieben wird.

15. Verfahren nach einem der Ansprüche 9 bis 14, bei dem das Beschlagteil derart eingetrieben wird, dass es die Hufensohle nicht berührt.

## Revendications

1. Fer (1) pour un animal à sabots ou à sabots fendus comprenant une tige (2) et une lame (3), la tige (2) étant contiguë à la lame (3) dans une zone de fixation (4) et s'étendant à partir de celle-ci vers une terminaison (5), formée de manière à ce que la tige (2) soit adaptée pour être enfoncée dans une paroi de corne (9), la lame (3) ayant une surface inférieure (10) destinée à buter contre un bord inférieur (11) de la paroi de corne, et une surface supérieure (12) adaptée à la surface plantaire de l'animal, **caractérisée en ce que** la zone de fixation est située le long d'une zone de pli de la lame (3).

2. Fer selon la revendication 1, dans lequel la lame (3) et la tige (2) forment un angle maximal de 100 °.

3. Fer selon les revendications 1 ou 2, dans lequel la lame (3) a une structure de matière différente de celle de la tige (2).

4. Fer selon l'une quelconque des revendications précédentes dans lequel la lame (3) a une zone d'au moins 5 fois l'aire de la section transversale de la tige (2) au point où l'aire de la section transversale de la tige (2) est la plus grande.

5. Fer selon l'une quelconque des revendications précédentes, comprenant de plus une structure de support empêchant le fer de tourner autour de la tige lorsque le fer est fixé à un sabot d'un animal à sabots ou à sabots fendus, la structure de support comprenant une surface de support (13) s'étendant à partir d'une zone de support dans laquelle la structure de support est contiguë à la lame et forme une bordure libre (14) à son extrémité opposée.

6. Fer selon l'une quelconque des revendications précédentes, la tige (2) formant une surface de stabilisation (16) empêchant le fer de tourner autour de la tige lorsque le fer est fixé à un sabot ou à un sabot fendu.

7. Fer selon les revendications 5 et 6, dans lequel la surface de stabilisation fait face à la surface de support (13).

8. Fer selon les revendications 5 à 7, dans lequel la surface de support (13) a une surface interne faisant face à la tige (2), et une surface externe tournée à l'opposé de la tige (2) et dans lequel la surface externe est coupée obliquement vers la bordure libre (14).

9. Méthode pour ferrer un sabot ou un sabot fendu d'un animal à sabots ou à sabots fendus au moyen d'un fer selon les revendications 1 à 8, la méthode comprenant l'enfoncement de la tige du fer dans la paroi de corne de manière à ce que la surface supérieure de la lame soit exposée afin de former une surface sur laquelle l'animal à sabots ou à sabots fendus peut marcher.

10. Méthode selon la revendication 9, dans laquelle la tige est enfoncée en un point d'enfoncement sur la surface inférieure de la paroi de corne, le point d'enfoncement étant situé entre une ligne centrale et une ligne de sécurité, la ligne de sécurité définissant une distance de sécurité à partir du pododerme et dans laquelle la distance à partir de la ligne centrale au bords externe et interne de la capsule de corne est la même.

11. Méthode selon la revendication 10, dans laquelle le fer est enfoncé suffisamment profondément pour que la surface inférieure de la lame bute contre le bord inférieur de la paroi de corne.

12. Une méthode selon l'une quelconque des revendications 9-11, dans laquelle le fer est enfoncé de manière à ce que le fer seulement constitue un supplément à la surface plantaire de l'animal de sorte que l'animal soit capable de prendre contact entre la surface inférieure de la paroi de corne et la surface plantaire au sol à des positions de la surface inférieure de la paroi de corne à laquelle aucun fer n'est fixé.

13. Méthode selon la revendication 12, dans laquelle le fer est enfoncé suffisamment profondément pour que la surface supérieure de lame soit au niveau de la surface inférieure de la paroi de corne formant une surface plantaire naturelle pour l'animal.

14. Méthode selon l'une quelconque des revendications 9 à 13 dans laquelle le fer est enfoncé sélectivement dans une paroi du talon, une paroi latérale ou une paroi d'orteil dépendant d'un état d'usure du sabot ou du sabot fendu de l'animal à sabots ou à sabots fendus.

15. Méthode selon l'une quelconque des revendications 9 à 14 dans laquelle le fer est enfoncé de manière à ce qu'il ne touche pas la semelle du sabot.
